# EUROPEAN PATENT APPLICATION

(11) **EP 2 662 379 A1**
(43) Date of publication of application: **13.11.2013**
(21) Application number: 12166947.7
(22) Date of filing: 07.05.2012
(51) Int. Cl.: C07F 7/22

(54) **Recycling of organotin compounds**

(71) Applicant: Universiteit Antwerpen, 2000 Antwerpen (BE)
(72) Inventor: Kuvshinov, Alexandr, 1150-326 Lisboa (PT); Franck, Philippe, B-2520 Ranst (BE); Depraetere, Stefaan, B-9160 Lokeren (BE); Maes, Bert, B-2610 Wilrijk (BE)
(74) Representative: Bird Goën & Co

(57) **Abstract**

A method for the synthesis of a first organic molecule, said method comprising the steps of:
a) Reacting a first reactant with an organotin reactant having at least one organic group having from 5 to 20 carbon atoms selected from alkyl, alkoxyalkyl, alkoxy, alkylthioalkyl, carboxylates and alkylaminoalkyl groups, thereby forming a mixture of a product and a tin-containing by-product, and
b) Removing most of the tin-containing by-product from said mixture in such a way as to provide a purified product comprising less than 1000 ppm of remaining tin-containing by-product, wherein said step of removing most of said tin-containing by-product is either an extraction between a first liquid being an alkane or a mixture of alkanes having from 5 to 17 carbon atoms and a second liquid more polar than said first liquid or is a reversed phase chromatography.

## Description

### Technical field of the invention

The present invention relates to synthetic methods involving the use of organotin compounds. In particular, the present invention relates to long chain (≥ 5 C) organotin compounds, the use of long chain organotin compounds in organic reactions, and in particular the use of long chain organotin compounds in Stille reactions.

### Background of the invention

Reactions using organotin reagents are valuable synthetic tools in organic synthesis. The Stille reaction, the cycloaddition of tri-alkyltin azides to nitriles (tetrazole synthesis), radical dehalogenations and radical cyclizations are examples of very useful transformations involving organotin reagents, which are unrivalled in terms of selectivity (functional group compatibility) and mildness of reaction conditions.

Moreover the organotin compounds possess excellent air- and moisture-stability in comparison with other organometallic reagents. Despite all these valuable properties, the toxicity of organotin compounds and the presence of the hard-to-remove tin by-product in the final product, make the use of these compounds on an industrial scale currently rather difficult.

Different approaches to tackle the purification and toxicity problems have been described. The vast majority of the organotin reactions is based on the tri-n-butyltin core and often a simple liquid/liquid extraction between acetonitrile and an alkane (mostly hexane) is used to purify the reaction product but the remaining tin content is usually still too high to skip further purification. For instance, Roberts et al. (Synthesis, communications, 1979, 471-473) acknowledge that the separation of the product from the tin residue is a major drawback of reduction reactions making use of tri-n-butyltin hydride. They recommended a hexane/acetonitrile liquid/liquid extraction (repeated five times) for the purification of reaction products obtained. The amount of tin residues in the final product was indicated to be less than 5%. However, in view of the toxicity of tin and in view of the detrimental effect it has on properties of many products, 5% is much too high. Espinet et al. (Chem. Eur. J. 2008, 14, 10141-10148) recently still acknowledged that an important drawback in the industrial use of the Stille reaction is the formation of toxic tin byproducts SnR₃X, which are harmful residues difficult to separate from the target product. They further indicated that even at the laboratory scale, the separation of tin byproducts is very cumbersome and that many efforts have been made to address this problem. Their own solution was the synthesis of a polymer matrix containing the tin functionality. The model reaction used was simple and the Sn content in the reaction products was from 200 to 700 ppm. The bulkyness of such polymer matrixes and the difficulty of their synthesis make their use not universally applicable. Other groups used different solubility control groups. Triarylphosphonium supported tin reagents (Chem. Eur. J., 2008, 10141-10148) and ionic liquid based compounds (Eur. J. Org. Chem., 2009, 3249-3257) result in tin side products that can be removed in an easy way due to their specific solubility properties. Most explored in this field however are the fluorous tin reagents. Curran et al. developed fluorous tin compounds including Stille reagents, azides and hydrides (see for instance : Tetrahedron, 1999, 8997-9006; J. Org. Chem., 1997, 8341-8349; J. Org. Chem., 1996, 6480-6481; Tetrahedron Letters, 1997, 7883-7886). Although these elegant solutions are promising on a laboratory scale, especially the application of fluorous solvents is difficult on an industrial scale (OPRD, 2007, 149-155). Also, Guy et al. (Chem. Commun., 2004, 1968-1969) acknowledged that removing organotin byproducts from product mixtures is a perennial problem. They indicate that while it is generally easy to reduce levels sufficiently to pass the purity criteria of micro-analysis, the high toxicity of organotin compounds necessitates removal to the parts per million level for health-care applications. They then go on to describe various attempts that have been made to solve this problem but they conclude that a cheap replacement, giving the scope of applications offered by tin based reagents, has yet to be identified. As a comparative example, they show that in the case of hydrodehalogenation of an aryl halide with tri-n-butyltin hydride, purification of the product via pentane/acetonitrile liquid/liquid extraction, followed by silica chromatography gives tin impurities in excess of 25 mol%. Their own solution involves the use of KF-Silica as a stationary phase for the chromatographic removal of tin residues and they claim to obtain a level of tin impurity below 30 ppm. These methods are applicable on lab scale, but found little or no industrial interest due to the complexity of the proposed procedure and/or sustainability aspects of the specific stannane reagents used. A recent review (Kellogg et al., Organic Process Research & Development, 2010, 14, 30-47) indicated that the main drawback of Stille coupling is that tin compounds are toxic and of low polarity, which make them poorly soluble in water. As a result, the reaction products are usually purified by column chromatography to remove the lipophilic organotin residue. They concluded that these two issues make the use of tin reagents on large scale not acceptable and not worthy of consideration. Therefore, despite the numerous advantages of organotin chemistry, more and more research is made on alternatives to tin chemistry (see for instance Chemistry in Britain, February 2002, 42-44; Walton et al. (Angew. Chem. Int. Ed. 1998, 37, 3072-3082); and Daia et al. (Organic Process Research & Development 2005, 9, 792-799)).

There is therefore a long felt need in the art for straightforward and cost-effective solution for removal, recovery and/or re-use of organotin derivatives.

### Summary of the invention

It is an object of the present invention to provide a general method for the synthesis of organic molecules which benefits from the advantages of organotin reagents while not showing their typical drawbacks. Some novel organotin reagents for use in this new method are also described.

The above objective is accomplished by methods and compounds according to embodiments of the present invention.

In a fist aspect, the present invention relates to a method for the synthesis of an organic molecule, said method comprising the steps of:
(a) Reacting a first reactant with an organotin reactant having at least one organic group having from 5 to 20 carbon atoms selected from alkyl, alkoxyalkyl, alkoxy, alkylthioalkyl, carboxylates of general formula R⁵COO-, and alkylaminoalkyl groups thereby forming a mixture of an organic molecule and a tin-containing by-product, and
(b) Removing at least 99% of the tin-containing by-product from said mixture in such a way as to provide a purified organic molecule comprising less than 10000 ppm, preferably less than 1000 ppm and most preferably less than 100 ppm of remaining tin-containing by-product, wherein said removing step is either an extraction between a first liquid being an alkane or a mixture of alkanes having from 5 to 17 carbon atoms and a second liquid more polar than said first liquid and at least partly immiscible therewith or is a reversed phase chromatography, wherein R⁵ is an alkyl group having from 1 to 18 carbon atoms.

To our surprise, the use of long alkyl chain tin derivatives remained completely unexplored for the Stille reactions and is only very scarcely studied for reactions involving tri-n-alkyltin azide and tri-n-alkylhydride as a reagent. For the latter two, long alkyl chains have only been explored in the framework of reducing the toxicity of the reagents and not in a separation context.

The use of a long chain (from 5 to 20 carbon atoms, preferably from 6 to 12 carbon atoms) surprisingly permits to obtain the organic molecule in an excellent purity after a simple liquid/liquid extraction procedure or a reversed phase chromatography procedure. This is especially surprising since the scientific community has been searching at least 40 years for an industrially applicable solution to the problem of product purification in organotin mediated reaction. Furthermore, the solution involving the use of a long chain (hence, having a lower polarity than butyl) goes against the current prejudice in the art which is that part of the problem is the low polarity of the tin compounds, which make them difficult to remove (see Kellogg et al.). Last but not least, tin compounds having longer carbon chains are less toxic than their shorter chain analogs.

The reversed phase chromatography typically involves a hydrophobic stationary phase (e.g. an alkyl modified silica such as C-18 silica) and a polar solvent mixture (such as e.g. acetonitrile and water).

The liquid/liquid extraction procedure is especially interesting since it is a procedure already widely in use in the industry due to its simplicity and its low cost. Typically it involves dissolving the crude product in an appropriate solvent (preferably the polar solvent that will be used for the extraction, i.e. the first liquid), washing a first volume of the obtained solution at least one time (preferably from 1 to 10 times, more preferably from 1 to 5 times, most preferably 3 or 4 times) with portion(s) of a first liquid being an alkane or a mixture of alkanes having from 5 to 17 carbon atoms, said portions having a second volume. The second volume can for instance be from 20 to 500 % of the first volume, preferably from 50 to 200% of the first volume and most preferably from 75 to 150% of the first volume. Typically, the first and second volumes are the same.

The organic molecule preferably does not have tin in its structure.

In embodiments, the organotin reactant may comprise one or two tin atoms. When two tin atoms are present, they may for instance be directly linked or they may be linked via an oxygen atom.

In embodiments, the organotin reactant having at least one organic group having from 5 to 20 carbon atoms may have the general formula R¹R²R³SnY,
wherein Y is selected from halogens, N₃, hydrogen, R⁴, carboxylates of general formula R⁵COO-, SnR⁷R⁸R⁹, OSnR⁷R⁸R⁹, OR', SiR'₃,
wherein R¹ and R² independently either:
● together with the Sn to which they are attached form a 5 or 6 membered saturated ring, said 5 or 6 membered saturated ring containing 3 or more carbon atoms and optionally one or more nitrogen, sulfur or oxygen atoms, or
● are independently selected from the group consisting of alkyl, alkoxy, alkoxyalkyl, alkylthioalkyl, alkylaminoalkyl, carboxylates of general formula R⁵COO- , aryl, heteroaryl, and mono- or poly-substituted alkyl, alkoxy, alkoxyalkyl, alkylthioalkyl, alkylaminoalkyl, carboxylates of general formula R⁵COO-, aryl and heteroaryl,
wherein R³ is selected from alkyl, alkoxyalkyl, alkoxy, alkylthioalkyl, alkylaminoalkyl, and carboxylates of general formula R⁵COO-, having from 5 to 20 carbon atoms,
wherein R⁵ is an alkyl group having from 1 to 18 carbon atoms, and wherein R⁴ is selected from aryl, heteroaryl, alkenyl (e.g. vinyl or allyl), alkynyl (e.g. acetylenyl), alkyl, benzyl, and mono- or poly-substituted aryl, heteroaryl, alkenyl, alkynyl, alkyl, and benzyl,
wherein R' is selected from the group consisting of alkyl, alkoxy, alkoxyalkyl, alkylthioalkyl, alkylaminoalkyl, carboxylates of general formula R⁵COO-, aryl, heteroaryl, and mono- or poly-substituted alkyl, alkoxy, alkoxyalkyl, alkylthioalkyl, alkylaminoalkyl, carboxylates of general formula R⁵COO-, aryl and heteroaryl,
wherein R⁷, R⁸ and R⁹ are the same or are different, wherein R⁷, R⁸ and R⁹ are independently selected from the group consisting of alkyl, alkoxy, alkoxyalkyl, alkylthioalkyl, alkylaminoalkyl, carboxylates of general formula R⁵COO-, aryl, heteroaryl, and mono- or poly-substituted alkyl, alkoxy, alkoxyalkyl, alkylthioalkyl, alkylaminoalkyl, carboxylates of general formula R⁵COO-, aryl and heteroaryl.

In embodiments, R' may selected from the group consisting of alkyl, alkoxy, alkoxyalkyl, alkylthioalkyl, alkylaminoalkyl, carboxylates of general formula R⁵COO- , aryl and heteroaryl groups, having from 5 to 20 carbon atoms,

In embodiments, R⁷ may be selected from alkyl, alkoxyalkyl, alkoxy, alkylthioalkyl, carboxylates of general formula R⁵COO-, and alkylaminoalkyl groups, having from 5 to 20 carbon atoms. In embodiments, R⁷, R⁸ and R⁹ may independently be selected from alkyl, alkoxyalkyl, alkoxy, alkylthioalkyl, carboxylates of general formula R⁵COO-, and alkylaminoalkyl groups, having from 5 to 20 carbon atoms. In embodiment, R¹, R², R³, R⁷, R⁸ and R⁹ may be the same and be selected from alkyl, alkoxyalkyl, alkoxy, alkylthioalkyl, and carboxylates of general formula R⁵COO-, alkylaminoalkyl groups, having from 5 to 20 carbon atoms.

Dibutyltin distearate is an illustrative example of organotin reactant, having at least one organic group having from 5 to 20 carbon atoms, having the general formula R¹R²R³SnY, wherein Y and R³ are each R⁵COO- whith R⁵ being C₁₇H₃₅-, wherein R¹ and R² are each butyl-. Another example of a similar compound is dibutyltin dilaurate.

In embodiments, R¹, R², and R³ are the same and are selected from alkyl, alkoxyalkyl, alkoxy, alkylthioalkyl, carboxylates of general formula R⁵COO-, and alkylaminoalkyl groups, having from 5 to 20 carbon atoms. Preferably, R¹, R², and R³ are the same and are selected from alkyl groups having from 5 to 20 carbon atoms.

Step (a) can of course involve the use of further reactants or catalysts. For instance, Stille reaction involves the use of a homogeneous or heterogeneous Pd catalyst (e.g. including nanoparticles). For instance, Pd(PPh₃)₄ can be used. Also, free radical dehalogenations and free radical cyclizations involve the use of a radical initiator such as AIBN.

Preferably, said second liquid as a dipole moment of more than 1.5, preferably more than 2, more preferably more than 2.5, even more preferably more than 3 and most preferably more than 3.5 D. Acetonitrile gave the best results amongst the tested solvents.

In an embodiment, the method may further comprise a further step wherein the removed tin-containing by-product is reacted with a second reactant to regenerate said organotin reactant.

In an embodiment, the amount of regenerated organotin reactant represents at least 90%, preferably at least 95% and even more preferably at least 98% of the amount of organotin reactant reacted in step (a).

The fact that a very large amount (close to the totality) of tin-containing by-product can be recuperated from the reaction mixture, and that the recuperated tin-containing by-product itself is of very good purity, make its regeneration interesting. This is especially the case in an embodiment wherein the regenerated organotin reactant is reused in step (a) of the present method, thereby recycling said regenerated organotin reactant. Such a close loop reaction scheme is both ecological and economical.

In embodiments, the method can be performed in a closed system. In embodiments, the recycling of the regenerated organotin reactant can be performed automatically.

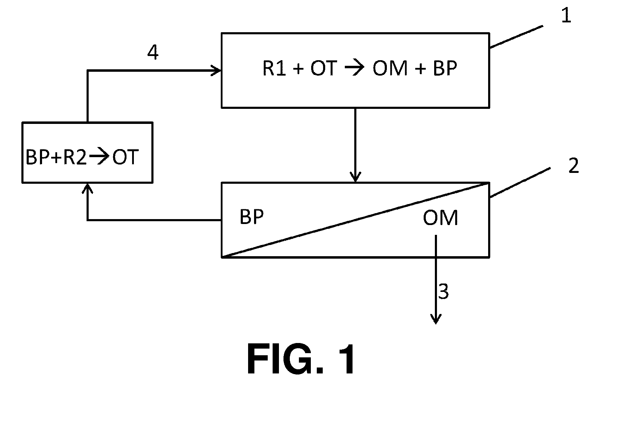

In an embodiment, the present invention relates to a method for the synthesis of an organic molecule (OM) in a closed system comprising a reactor (1) and an extractor (2) in fluidic connection with one another, said method comprising the steps of (see Fig. 1 for a depiction of the basic steps)
(a) In said reactor (1), reacting a first reactant (R1) with an organotin reactant (OT) having at least one organic group having from 5 to 20 carbon atoms selected from alkyl, alkoxyalkyl, alkoxy, alkylthioalkyl, carboxylates of general formula R⁵COO-, and alkylaminoalkyl groups thereby forming a mixture of said organic molecule (OM) and a tin-containing by-product (BP),
(b) In said extractor (2), extracting said mixture between a first liquid being an alkane or a mixture of alkanes having from 5 to 17 carbon atoms and a second liquid more polar than said first liquid and at least partly immiscible with said first liquid, thereby providing a first fraction comprising said organic molecule (OM) in said second liquid and a second fraction comprising said tin-containing by-product (BP) in said first liquid,
(c) Removing (3) said first fraction from said closed system, and optionally removing said second liquid, thereby providing said organic molecule (OM)
(d) Optionally concentrating said second fraction,
(e) Reacting the tin-containing by-product (BP) in said second fraction with a second reactant (R2) to regenerate said organotin reactant (OT),
(f) Optionally purifying said organotin reactant (OT),
(g) Optionally concentrating said organotin reactant (OT),
(h) Directing (4) said organotin reactant (OT) back to said reactor (1) and introducing fresh new first reactant (R1) in said reactor,
(i) Repeating steps (a) to (c) and optionally one or more of steps (d) to (i).

The invention according to embodiments of the first aspect is useable for any kind of synthesis involving an organotin reactant and the following reaction types have been successfully performed according to embodiments of the invention: Stille reactions, cycloadditions of tri-alkyltin azides to nitriles, radical dehalogenations and radical cyclizations.

Although a few examples of long chain tin hydrides and tin azides are known in the prior art, it was not realized in the prior art that such organotin compound could be very efficiently purified via the very simple (but considered inefficient due to its low efficiency with tributyl tin derivatives) liquid/liquid extraction.

In a second aspect, the present invention relates to the use of an organotin reactant having at least one organic group having from 5 to 20 carbon atoms selected from alkyl, alkoxyalkyl, alkoxy, alkylthioalkyl, carboxylates of general formula R⁵COO-, and alkylaminoalkyl groups in a Stille reaction. In the case of Stille reaction, the applicant is not aware of any prior disclosure of organotin reactant having at least one organic group having from 5 to 20 carbon atoms selected from alkyl, alkoxyalkyl, alkoxy, alkylthioalkyl, carboxylates of general formula R⁵COO-, and alkylaminoalkyl groups, wherein R⁵ is an alkyl group having from 1 to 18 carbon atoms. In an embodiment, said organotin reactant may be of general formula SnR¹R²R³R⁴,
wherein R¹ and R² independently either:
● together with the Sn to which they are attached form a 5 or 6 membered saturated ring, said 5 or 6 membered saturated ring containing 3 or more carbon atoms and optionally one or more nitrogen or oxygen atoms, or
● are independently selected from the group consisting of alkyl, alkoxy, alkoxyalkyl, alkylthioalkyl, carboxylates of general formula R⁵COO-, and alkylaminoalkyl groups, aryl, heteroaryl, mono- or poly-substituted alkyl, alkoxy, alkoxyalkyl, alkylthioalkyl, carboxylates of general formula R⁵COO-, alkylaminoalkyl groups, aryl and heteroaryl,
wherein R³ is selected from alkyl, alkoxyalkyl, alkoxy, alkylthioalkyl, carboxylates of general formula R⁵COO-, and alkylaminoalkyl groups, having from 5 to 20 carbon atoms,
wherein R⁴ is selected from aryl, heteroaryl, alkenyl (e.g. vinyl or allyl), alkynyl (e.g. acetylenyl), alkyl, benzyl, mono- or poly-substituted aryl, heteroaryl, alkenyl, alkynyl, alkyl, and benzyl.

In embodiments, R¹, R², and R³ are the same and are selected from alkyl, alkoxyalkyl, alkoxy, alkylthioalkyl, carboxylates of general formula R⁵COO-, and alkylaminoalkyl groups, having from 5 to 20 carbon atoms.

In a third aspect, the present invention relates to an organotin compound having the general formula R¹R²R³SnR⁴ wherein R¹ and R² either:
● together with the Sn to which they are attached form a 5 or 6 membered saturated ring, said 5 or 6 membered saturated ring containing 3 or more carbon atoms and optionally one or more nitrogen or oxygen atoms, or
● are independently selected from the group consisting of alkyl, alkoxy, alkoxyalkyl, alkylthioalkyl, carboxylates of general formula R⁵COO-, alkylaminoalkyl, aryl, heteroaryl, mono- or poly-substituted alkyl, alkoxy, alkoxyalkyl, alkylthioalkyl, carboxylates of general formula R⁵COO-, alkylaminoalkyl, aryl and heteroaryl,
wherein R³ is selected from alkyl, alkoxyalkyl, alkoxy, alkylthioalkyl, carboxylates of general formula R⁵COO-, and alkylaminoalkyl groups, having from 5 to 20 carbon atoms,
Wherein R⁴ is selected from aryl, heteroaryl, alkynyl, benzyl, mono- or poly-substituted aryl, heteroaryl, alkynyl, and benzyl, with the proviso that R4 is neither phenyl nor a biphenyl having its bond linking both phenyls in meta of the tin atom.

These compounds are particularly advantageous as they lead (in a method according to the first aspect) to very easily purified tin side-products.

In an embodiment, R³ may be an alkyl having from 5 to 20 carbon atoms. In an embodiment, R¹, R² and R³ may be the same.

In an embodiment, R¹, R² and R³ may be the same and may be selected from alkyl, alkoxyalkyl, alkoxy, alkylthioalkyl, carboxylates of general formula R⁵COO-, and alkylaminoalkyl groups, having from 5 to 20 carbon atoms.

In a fourth aspect, the present invention relates to a method for synthesizing an organotin compound according to any embodiment of the third aspect, said method comprising a step of reacting an organotin compound of general formula R¹R²R³SnX with a Grignard reagent of general formula R⁴MgR⁴ or R⁴MgX', wherein X and X' are independently selected from halogens and pseudo halogens.

In a fifth aspect, the present invention relates to an organotin compound having the general formula R¹R²R³SnY,
wherein Y is selected from halogens, N₃, hydrogen, R⁴, carboxylates of general formula R⁵COO-, SnR⁷R⁸R⁹, OSnR⁷R⁸R⁹, OR', SiR'₃,
wherein R¹ and R⁴ are independently selected from the group consisting of aryl, mono-substituted aryl, and poly-substituted aryl,
wherein R² is selected from alkyl, alkoxyalkyl, alkoxy, alkylthioalkyl, carboxylates of general formula R⁵COO-, and alkylaminoalkyl groups, having from 5 to 20 carbon atoms and aryl, mono-substituted aryl, and poly-substituted aryl,
wherein R³ is selected from alkyl, alkoxyalkyl, alkoxy, alkylthioalkyl, carboxylates of general formula R⁵COO-, and alkylaminoalkyl groups, having from 5 to 20 carbon atoms, wherein R⁵ is an alkyl group having from 1 to 18 carbon atoms.

In embodiments, R¹, R², and R³ are the same and are selected from alkyl, alkoxyalkyl, alkoxy, alkylthioalkyl, carboxylates of general formula R⁵COO-, and alkylaminoalkyl groups, having from 5 to 20 carbon atoms, wherein R⁵ is an alkyl group having from 1 to 18 carbon atoms.

In a sixth aspect, the present invention relates to an organotin compound having the general formula R¹R⁵R³SnY wherein Y is selected from halogens, N₃, hydrogen, R⁴, carboxylates of general formula R⁵COO-, SnR⁷R⁸R⁹, OSnR⁷R⁸R⁹, OR', SiR'₃,
wherein R¹ and R² together with the Sn to which they are attached form a 5 or 6 membered saturated hydrocarbon ring containing 3 or more carbon atoms and optionally one or more nitrogen or oxygen atoms,
wherein R³ is an alkyl having from 5 to 20 carbon atoms,
wherein R⁴ is selected from aryl, heteroaryl, alkynyl, benzyl, mono- or poly-substituted aryl, heteroaryl, alkynyl, and benzyl,
wherein R⁵ is an alkyl group having from 1 to 18 carbon atoms,
wherein R⁷, R⁸, R⁹ and R' are as define in the first aspect.

In a seventh aspect, the present invention relates to an organotin compound having the general formula R¹R²R³SnY wherein Y is selected from halogens, N₃, hydrogen, R⁴, carboxylates of general formula R⁵COO-, SnR⁷R⁸R⁹, OSnR⁷R⁸R⁹, OR', SiR'₃,
wherein R¹ and R² are independently selected from the group consisting of alkyl, alkoxy, alkoxyalkyl, alkylthioalkyl, carboxylates of general formula R⁵COO-, and alkylaminoalkyl, aryl, heteroaryl, mono- or poly-substituted alkyl, alkoxy, alkoxyalkyl, alkylthioalkyl, carboxylates of general formula R⁵COO-, and alkylaminoalkyl, aryl and heteroaryl,
wherein R³ is selected from alkoxyalkyl, alkoxy, alkylthioalkyl, carboxylates of general formula R⁵COO-, and alkylaminoalkyl groups, having from 5 to 20 carbon atoms and preferably is selected from alkoxy and alkoxyalkyl, having from 5 to 20 carbon atoms,
wherein R⁴ is selected from aryl, heteroaryl, alkynyl, benzyl, mono- or poly-substituted aryl, heteroaryl, alkynyl, and benzyl,
wherein R⁵ is an alkyl group having from 1 to 18 carbon atoms.

In embodiments, R¹, R², and R³ are the same and are selected from alkyl, alkoxyalkyl, alkoxy, alkylthioalkyl, carboxylates of general formula R⁵COO-, and alkylaminoalkyl groups, having from 5 to 20 carbon atoms.

The compounds of the third, fifth, sixth and seventh aspect, all share the advantage of leading (in a method according to the first aspect) to tin side-products that are easily purified as described in the first aspect of the present invention.

### Definitions:

As used herein and unless provided otherwise, the term alkane refers to straight or branched chain saturated hydrocarbon compounds such as, for example n-pentane, dimethylpropane, n-hexane, cyclohexane, 2-methylpentane, 3-methylpentane, n-heptane and the like.

As used herein and unless provided otherwise, the term alkyl refers to straight or branched chain saturated hydrocarbon radicals such as, for example, methyl, ethyl, propyl, n-butyl, 1-methylethyl (isopropyl), 2-methylpropyl (isobutyl), 1,1-dimethylethyl (tert-butyl), 2-methylbutyl, n-pentyl, dimethylpropyl, n-hexyl, cyclohexyl, 2-methylpentyl, 3-methylpentyl, n-heptyl and the like. As used herein and unless provided otherwise, alkyl groups have preferably from 1 to 20 carbon atoms.

As used herein and unless provided otherwise, the term alkenyl refers to a straight or branched hydrocarbon monovalent radical having one or more ethylenic unsaturations and having at least two carbon atoms (preferably from 2 to 20 carbon atoms) such as, for example, vinyl, 1-propenyl, 2-propenyl (allyl), 1-butenyl, 2-butenyl, 2-pentenyl, 3-pentenyl, 3-methyl-2-butenyl, 3-hexenyl, 2-hexenyl, 2-heptenyl, 1,3-butadienyl, pentadienyl, hexadienyl, heptadienyl, heptatrienyl and the like, including all possible isomers thereof.

As used herein and unless provided otherwise, the term alkynyl refers to straight or branched chain hydrocarbon radicals containing one or more triple bonds and optionally at least one double bond having at least 2 carbon atoms (preferably having from 2 to 20 carbon atoms) such as, for example, acetylenyl, 1-propynyl, 2-propynyl, 1-butynyl, 2-butynyl, 2-pentynyl, 1-pentynyl, 3-methyl-2-butynyl, 3-hexynyl, 2-hexynyl, 1-penten-4-ynyl, 3-penten-1-ynyl, 1,3-hexadien-1-ynyl and the like.

As used herein and unless provided otherwise, the term alkoxy refers to substituents wherein an alkyl radical (as defined herein), is attached to an oxygen atom through a single bond, such as but not limited to methoxy, ethoxy, propoxy, butoxy, pentoxy, isopropoxy, sec-butoxy, tert-butoxy, isopentoxy, cyclopropyloxy, cyclobutyloxy, cyclopentyloxy, an the likes.

As used herein and unless provided otherwise, the term alkylthioalkyl refers to a first alkyl group attached to a sulphur atom through a single bond, said sulphur atom being attached to a second alkyl group.

As used herein and unless provided otherwise, the term alkylaminoalkyl refers to a first alkyl group attached to an amino atom through a single bond, said amino atom being attached to one or two further alkyl groups.

As used herein and unless provided otherwise, the term alkoxyalkyl refers to an alkyl substituted with an alkoxy.

As used herein and unless provided otherwise, the term "carboxylate" refers to a chemical group of the general formula R⁵COO- wherein R⁵ is an alkyl group having from 1 to 18 carbon atoms. For instance, in the formula R¹R²R³SnY, if Y is a carboxylate, the formula can be re-written R¹R²R³Sn-O-CO-R5.

As used herein and unless provided otherwise, the term Stille reaction refers to a reaction in which a first organic species R⁶-X is reacted with an organotin compound of formula R¹R²R³SnR⁴ in the presence of a palladium catalyst to form a product R⁶-R⁴.

As used herein and unless provided otherwise, the term pseudo halogen (or pseudo halide) refers to a functional groups reacting like a halide in the concerned reaction. For instance, pseudo halides can be triflate, mesitylate, nonaflate, carbonylhalide, sulfonylhalide, perfluoroalkylsulfonate, arylphosphate, alkylphosphate, diarylarsine, diarylphosphine, diarylstibine, aryliodonium salt, or diazonium salt.

R¹ to R⁴ are as defined in any embodiments of any aspect of the present invention.

X is selected from a halide and pseudo halides. Here, pseudo halides are functional groups reacting like halides in the Stille reaction (e.g. triflate, mesitylate, nonaflate, carbonylhalide, sulfonylhalide, perfluoroalkylsulfonate, arylphosphate, alkylphosphate, diarylarsine, diarylphosphine, diarylstibine, aryliodonium salt, and diazonium salt)

Since Stille reactions work with most aryl groups and are compatible with most functional groups, the terms aryl and heteroaryl are to be understood generally in their broadest sense.

In particular but not limited thereto, the term aryl includes aromatic monocyclic or multicyclic groups containing from 6 to 30 and preferably 6 to 19 carbon atoms. Aryl groups include, but are not limited to phenyl, naphthyl, anthracenyl, phenantracyl, fluoranthenyl, chrysenyl, pyrenyl, biphenylyl, terphenyl, picenyl, indenyl, biphenyl, indacenyl, benzocyclobutenyl, benzocyclooctenyl and the like, including fused benzo-C₄₋₈ cycloalkyl radicals such as, for instance, indanyl, tetrahydronaphtyl, fluorenyl and the like.

Aryl groups can further be mono or poly-substituted with alkyl, alkenyl, alkynyl, alkoxy, alkoxyalkyl, oligomers of ethylene glycol or propylene glycol, halogen, amino, aminoalkyl, nitro, hydroxyl, sulfhydryl and nitro groups amongst others.

In particular but not limited thereto, the term heteroaryl includes monocyclic or multicyclic aromatic ring systems where one or more of the atoms in the ring system is a heteroatom, that is, an element other than carbon, including but not limited to, nitrogen, oxygen or sulfur. In certain embodiments, the ring system may have from 5 to about 15 atoms. In one embodiment 1 to 3 atoms in the ring system are heteroatoms,

The heteroaryl group may be optionally fused to a benzene ring. Heteroaryl groups include, but are not limited to, furyl, imidazolyl, pyrimidinyl, tetrazolyl, thienyl, pyridyl, pyrrolyl, thiazolyl, isothiazolyl, oxazolyl, isoxazolyl, triazolyl, quinolinyl and isoquinolinyl amongst others.

Heteroaryl groups can further be mono or poly-substituated with alkyl, alkenyl, alkynyl, alkoxy, alkoxyalkyl, oligomers of ethylene glycol or propylene glycol, halogen, amino, aminoalkyl, nitro, hydroxyl, sulfhydryl or nitro groups amongst others.

As used herein and unless provided otherwise, the term mono- or polysubstituted alkyl, alkenyl alkynyl, alkoxy or alkoxyalkyl refers to alkyl, alkenyl alkynyl, alkoxy or alkoxyalkyl as defined above substituted one or more time with halogen, amino, aminoalkyl, nitro, hydroxyl, sulfhydryl or nitro groups amongst others.

Particular and preferred aspects of the invention are set out in the accompanying independent and dependent claims. Features from the dependent claims may be combined with features of the independent claims and with features of other dependent claims as appropriate and not merely as explicitly set out in the claims.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

### Brief description of the drawings

Fig. 1 is a schematic representation of a method according to an embodiment of the present invention.

In the figure, the same reference signs refer to the same or analogous elements.

### Description of illustrative embodiments

The present invention will be described with respect to particular embodiments and with reference to certain drawings but the invention is not limited thereto but only by the claims. Any reference signs in the claims shall not be construed as limiting the scope. The drawings described are only schematic and are non-limiting. In the drawings, the size of some of the elements may be exaggerated and not drawn on scale for illustrative purposes.

Where the term "comprising" is used in the present description and claims, it does not exclude other elements or steps. Where an indefinite or definite article is used when referring to a singular noun e.g. "a" or "an", "the", this includes a plural of that noun unless something else is specifically stated.

Furthermore, the terms first, second, third and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

Furthermore, some of the embodiments are described herein as a method or combination of elements of a method that can be implemented by a processor of a computer system or by other means of carrying out the function. Thus, a processor with the necessary instructions for carrying out such a method or element of a method forms a means for carrying out the method or element of a method. Furthermore, an element described herein of an apparatus embodiment is an example of a means for carrying out the function performed by the element for the purpose of carrying out the invention.

In the description provided herein, numerous specific details are set forth. However, it is understood that embodiments of the invention may be practiced without these specific details. In other instances, well-known methods, structures and techniques have not been shown in detail in order not to obscure an understanding of this description.

### Examples

### 1. Synthesis of tri-alkyltin chlorides.

The tri-*n*-octyltin chloride used in these first extraction experiments was very expensive and of moderate purity. In order to have a good procedure to access it in very pure form and to be able to synthesize other types of tri-alkyltin compounds synthesis of tri-*n*-octyltin chloride through tri-*n*-octyltin acetate (scheme 1) was optimized. For this purpose, a method disclosed in Lida et al (preparation of highly pure tri-n-octyltin hydride, 1994, Sankyo Organic Chemicals Co, Japan, p.5) was adapted.

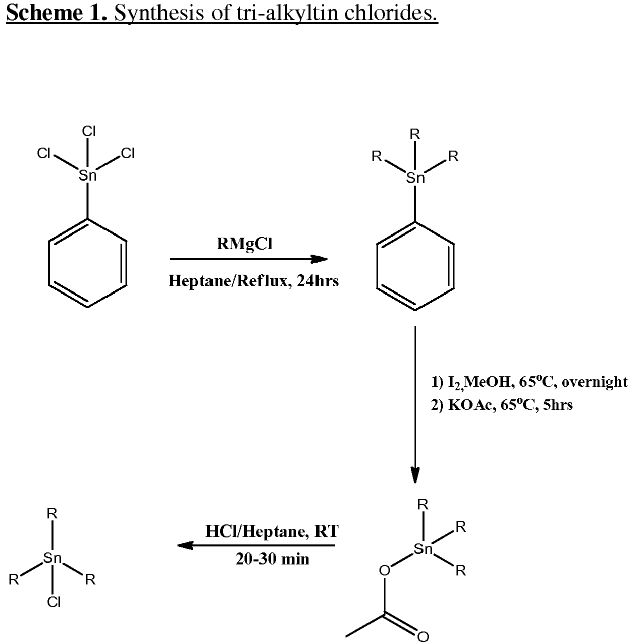

### Synthesis of tri-alkyltin chlorides. Typical procedure: Synthesis of trioctyltin chloride.

A dry 1 L round-bottomed flask was charged with dry heptane (200 mL), in which trichloro(phenyl)stannane (25g, 83 mmol) was dissolved under a flow of nitrogen to give a colorless solution.
To this solution, octylmagnesium bromide (137mL, 2M, 273 mmol) was added dropwise at RT under nitrogen. The reaction mixture was stirred at 35 °C overnight and poured onto 250 g of crushed ice. The heptane layer was separated and washed with water (1 x 200mL) and acetonitrile (3 x 150 mL) and concentrated in vacuo to give a colourless oil.
The resulting oil was dissolved in methanol (150mL) and iodine (21,21g, 84 mmol) was added. The reaction was stirred overnight at 65 °C then potassium acetate (24,36g, 248 mmol) was added, heating was continued for 5 hrs more and the reaction was cooled to RT.
The mixture was diluted with 250 ml of heptane and washed with 150 ml of water (X2) and ACN (3X100ml). The heptane layer was concentrated in vacuo and the resulting colourless oil was dissolved in 200 ml of EtOAc and cooled to -23°C. The precipitated white solid was collected by filtration and dried to give 31 of white powder. Yield: 72,4%.
The obtained acetate (25g, 48.3 mmol) was dissolved in heptane (200 mL) and the solution was treated with 36% HCl (70.5 mL, 1933 mmol) for 20 minutes at room temperature. The heptane layer was separated, concentrated in vacuo and dried under vacuum to give colourless oil (23.21 g, 47mmol) which was used without further purification. Yield: 97%.
¹H NMR (CDCl₃): δ = 1.79-1.53 (6H, m), 1.38-1.19 (36H, m), 0.94-0.83 (9H, t, - CH₂**Me**)
¹¹⁹Sn NMR (CDCl₃): δ = 155.13.

**Table 2. Overview of the synthesized of trialkyltin acetates and the corresponding chlorides (R¹R²R³SnX) and their unoptimised yields(%).**

| R | n-Hexyl | Cyclohexyl | n-Octyl | 2-Ethylhexyl | Dibutyloctyl* | n-Dodecyl | n-Octadecyl | n-Tetradecyl |
|---|---|---|---|---|---|---|---|---|
| Acetate | 46 | 57 | 72 | 95 | 13 | 67 | 55 | 22 |
| Chlorid e | 44 | 60 | 100 | 94 | 68 | 47 | 67 | 74 |

| | | | | | | | | |
|---|---|---|---|---|---|---|---|---|
| * R¹=R²=*n*-Bu, R³=*n-*Octyl. Prepared using the typical procedure, by adding 1 eq of octylmagnesium chloride to dibutyltin dichloride. | | | | | | | | |

**Table 3a. Characterisation of the synthesized of trialkyltin acetates and the corresponding chlorides (R¹R²R³SnX)**

| **R** | **n-Hexyl** | **Cyclohexyl** | **n-Octyl** | **2-Ethylhexyl** |
|---|---|---|---|---|
| **¹H NMR (CDCl₃) Actetate, ppm** | 2.03(3H, s, -O**Me)**, 1.5-1.75 (6H, m), 1.2-1.35 (24H, m), 0.93-0.85 (9H, t, -CH₂**Me)** | 2.00 (3H, s, -OMe), 1.99-1.76 (9H, m), 1.75-150 (15H,m), 1.45-1.18 (9H,t) | 2.03 (3H, s, -O**Me)**, 1.75-1.50 (6H,m), 1.45-1.20 (40H, m), 0.92-0.83 (9H, t, -CH₂**Me**) | 2.00 (3H, s, -O**Me)**, 1.85-1.65 (3H,m), 1.45-1.15 (30H, m), 0.92-0.81 (18H, m, -CH₂**Me)** |
| **¹H NMR (CDCl₃) Chloride, ppm** | 1.80-1.55 (6H, m), 1.40-1.25 (24H, m), 0.95-0.85 (9H, t, -CH₂**Me)** | 1.97-1.90 (6H, m), 1.88-176 (4H, m), 1.74-1.53 (14H, m), 1.45-1.25 (9H, t, -CH₂**Me)** | 1.79-1.53 (6H, m), 1.38-1.19 (36H, m), 0.94-0.83 (9H, t, -CH₂**Me)** | 1.80-1.70 (3H, m), 1.45-1.15 (30H, m), 0.95-0.80 (18H, t, -CH₂**Me)** |
| **¹¹⁹Sn NMR (CDCl₃) Actetate, ppm** | **104.91 (s)** | **65.07 (s)** | **105.16 (s)** | **111.33 (s)** |
| **¹¹⁹Sn NMR (CDCl₃) Chloride, ppm** | **155.07 (s)** | **153.03 (s)** | **155.13 (s)** | **153.03 (s)** |

**Table 3b. Characterisation of the synthesized trialkyltin acetates and the corresponding chlorides (R¹R²R³SnX)**

| **R** | **Dibutyloctyl** | **n-Dodecyl** | **n-Octadecyl** | **n-Tetradecyl** |
|---|---|---|---|---|
| **¹H NMR (CDCl₃) Actetate, ppm** | 1.93 (3H, s, -O**Me)**, 1.85-1.65 (8H,m), 1.50-1.15 (15H, m), 1.00-0.95 (12H, m, -CH₂**Me)** | 2.03 (3H, s, -O**Me)**, 1.74-1.58 (6H, m), 1.45-1.20 (60H, m), 0.92-0.85 (9H, t, -CH₂**Me)** | 2.03 (3H, s, -O**Me)**, 1.65-1.56 (6H, m), 1.35-1.20 (86H, m), 0.90-0.85 (9H, t, -CH₂**Me)** | **Very low solubility** |
| **¹H NMR (CDCl₃) Chloride, ppm** | 1.98-1.63 (115H,m), 1.49-1.34 (8H, m), 1.00-0.92 (12H, m, -CH₂**Me**) | 1.70-1.60 (6H, m), 1.35-1.20 (59H, m), 0.90-0.82 (9H, t, -CH₂**Me**) | **Very low solubility** 1.55-1.44 (6H, m), 1.40-1.25(86H, m), 0.92-0.85 (9H, t, -CH₂**Me** | 1.85-1.80 (6H, m), 1.35-1.20 (72H, m), 0.92-0.85 (9H, t, -CH₂**Me**) |
| **¹¹⁹Sn NMR (CDCl₃) Actetate, ppm** | | **105.39 (s)** | **105.36 (s)** | |
| **¹¹⁹Sn NMR (CDCl₃) Chloride, ppm** | | **155.54 (s)** | **Very low solubility** | **155.16 (s)** |

A trialkyltin chloride in which two alkyl chains are connected was also prepared, delivering a stannacycloalkane.

### Scheme 2. Trialkyltin chlorides featuring a stannacycloalkane moiety: synthesis of 1-chloro-1-octylstanninane.

### 1-chloro-1-octylstanninane is prepared according to the following scheme:

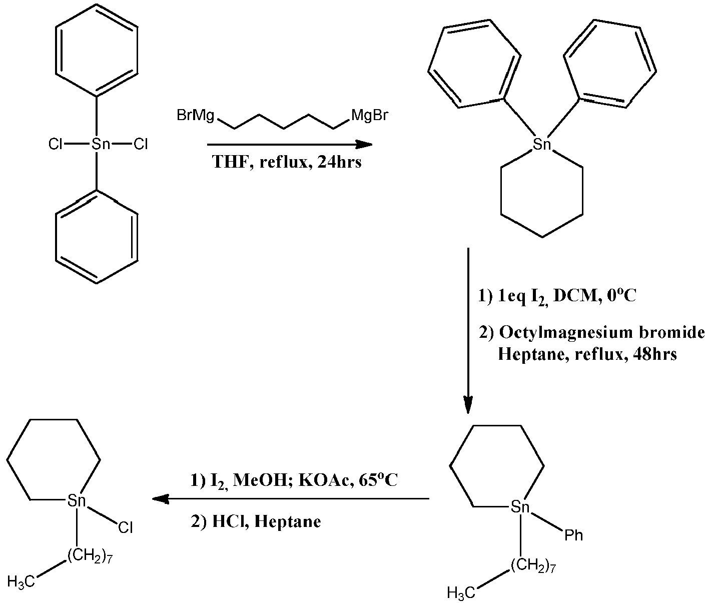

### 2 Synthesis of di-alkylaryltin chlorides.

An example containing a combination of two alkyl groups and an aryl group has also been synthesised (Scheme 3). Dioctyl(phenyl)tin chloride was chosen. Milder conditions (Dichloromethane (DCM), 0°C) and control of the stoichiometry of iodine were used to selectively replace one phenyl group in dioctyl(diphenyl)tin with iodine. Dioctyl(phenyl)tin acetate and the corresponding chloride were prepared from this compound and the typical synthetic procedure is given below.

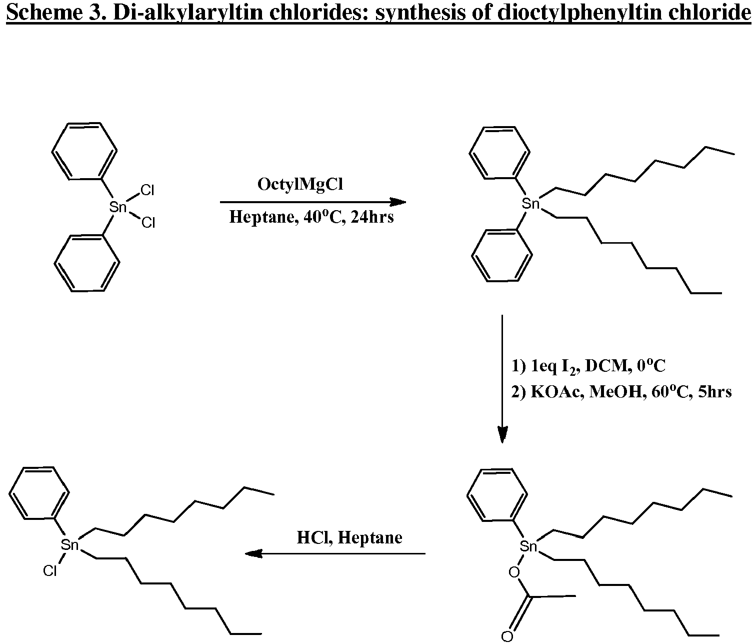

### Synthesis of di-alkylaryltin chlorides. Typical procedure: Synthesis of dioctyl(phenyl)tin chloride.

Diphenyltin dichloride (2.5g, 7.27mmol) was dissolved in dry n-heptane (100mL) in a round-bottom flask under nitrogen. To this mixture, a 2M solution of octylmagnesium chloride (8,73 mL) was slowly added at RT and the system was stirred for 3 more hrs. The temperature was then brought to 40°C and stirring continued for 24 hrs. The obtained white suspension was poured onto ice (150 g), more water was added (150mL) the mixture was stirred and the organic layer was separated, washed with water (2 x 150 mL) and acetonitrile (3 x 100 mL). The heptane layer was then dried over sodium sulfate and concentrated in vacuo to give 2,5 g of viscous oil. Yield 69%. A solution of stannane (2g, 4.01 mmol) in DCM (30 mL) was cooled to 0°C (ice bath), and iodine (1.01 g, 4.01 mmol) was added in small portions at stirring. When all the iodine dissolved and the solution became colorless, the solvent was removed in vacuo and to the obtained viscous oil methanol (25mL) was added, followed by KOAc (1,2g, 12.02 mmol) and the mixture was stirred at 60°C for 5hrs and then overnight at RT. The mixture was diluted with heptane (100 mL), washed with water (2 x 100mL), acetonitrile (3 x 50 mL) and the heptane layer was evaporated in vacuo. The obtained oil (still containing iodobenzene) was dissolved in 20mL of ethyl acetate and cooled to -23°C in the freezer for 2 days. Scratching with a spatula initiated crystallisation. 250 mg of the white solid were collected by filtration and dried in vacuo. Yield 13%.
¹H NMR (CDCl₃): δ = 7.60-7.53 (2H, m),7.40-7.35 (3H, m), 2.1 (3H, s, -O**Me**),1.85-1.74 (4H, m),1.41-1.25 (4H, m), 1.32-1.20 (20H, m), 0.89-0.85 (9H, t, -CH₂**Me**)
¹¹⁹Sn NMR (CDCl₃): δ = 24.5.
The final dioctyl(phenyl)tin chloride was obtained by stirring the dioctyl(phenyl)tin acetate (0.4 mmol) dissolved in n-heptane (5 mL) with concentrated HCl (15 mmol) at room temperature with 95% yield as white solid.

### 3 Synthesis of tri-alkoxyalkyltin chlorides.

An organotin compound containing an oxygen atom in one of its alkyl chains is synthesized (Scheme 4).

### Scheme 4. Synthesis of a tri-alkoxyalkyltin chloride. Typical procedure: Synthesis of (tris{6-[(1-methylpentyl)oxy]hexyl})tin chloride.

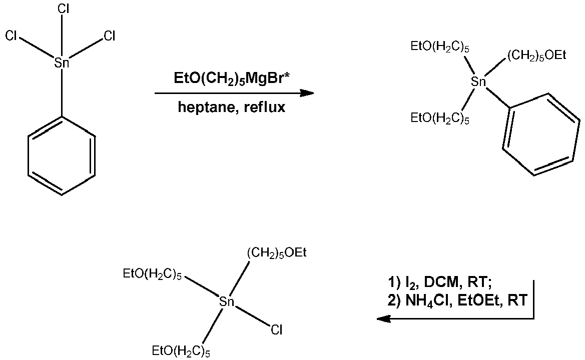

* Preparation JP 11049725

### 4 Synthesis of tri-alkylthioalkyltin chlorides.

An organotin compound containing a sulfur atom in each of its alkyl chains is synthesized (Scheme 5).

### Scheme 5. Synthesis of tri-alkylthioalkyltin chloride. Typical procedure:

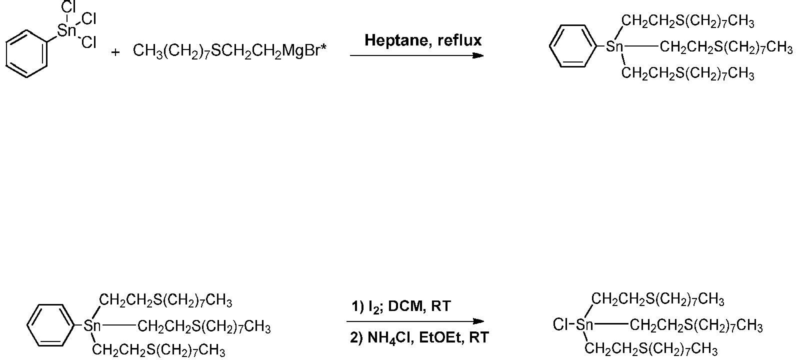

* Preparation: Koshima et al, WO9918112A1

### 5 Synthesis of tri-alkylaminoalkyltin chlorides.

An organotin compound containing an amino atom each of its alkyl chains is synthesized (Scheme 6).

### Scheme 6. Synthesis of tri-alkylaminoalkyltin chloride. Typical procedure:

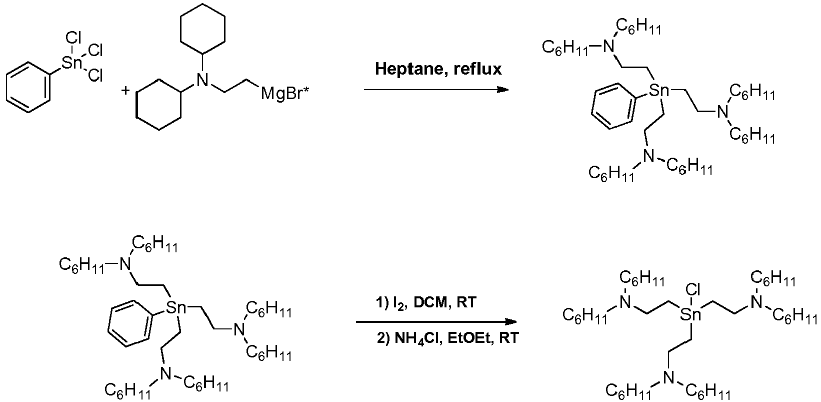

* Preparation: J. Organomet. Chem., 182(3), 313-322, 1978

### 6 Liquid-liquid extraction with organotin compounds featuring different chains.

To explore the influence of the alkyl chain length on the separation via extraction we dissolved 0.5 g of a tin compound in 50 ml of an alkane and extracted this with 50 ml of a polar solvent. The amount of tin compounds in the polar layer was determined (Table 1). From this simple experiment several conclusions could be made:
- The influence of the chain length of the alkane composing the apolar extraction solvent is not very important.
- Acetonitrile is advantageous as the polar extraction solvent.
- Longer alkyl chains on the tin atom increase the efficiency of the extraction dramatically.

**Table 4. Liquid/liquid extraction in biphasic solvent systems (% in polar solvent).**

| **Solvent mixture** | **tri-*n*-butyltin chloride** | **tri-*n*-octyltin chloride** |
|---|---|---|
| **acetonitrile/*n*-decane** | **35 %** | **<5%** |
| **acetonitrile/*n*-octane** | **35 %** | **<5%** |
| **acetonitrile/heptanes*** | **40 %** | **<5%** |
| **acetonitrile/*n*-pentane** | **45 %** | **<5%** |
| **methanol/*n*-decane** | **60 %** | **60 %** |
| **ethylene glycol/*n*-decane** | **35 %** | **20 %** |
| **ethylene glycol/heptanes*** | **35 %** | **20 %** |
| **ethylene glycol/*n*-pentane** | **35 %** | **20 %** |

| | | |
|---|---|---|
| * Heptane, boiling range 89-95°C, 7-14 % *n*-heptane | | |

To select the best candidate among the synthesized organotin compounds we performed the extractions with heptanes using all our organotin products.

### Typical Extraction Procedure.

1mmol of 4'-methylbiphenyl-2-carbonitrile were dissolved in 50 mL of acetonitrile. This solution was placed into a separation funnel to which 50 mL of heptanes were added followed by 1mmol of an appropriate tin compound. The system was vigorously shaken. The acetonitrile layer was separated, concentrated in vacuo and the solid residue was analyzed by ICP-MS.

### 7 Behavior of organotin compounds featuring different chains in reversed phase chromatography.

Farina et al (Journal of Organic Chemistry, 1991, 56(16): p.4985-4987), used reversed phase chromatography to purify tri-*n*-butyl tin reagents for use in Stille reactions. However reversed phase chromatography was not considered as an option to use after a Stille reaction in order to get rid of the organotin waste produced during the reaction.

In the context of the present invention, the retention times of some tri-*n-*butyltin compounds and their tri-*n*-octyltin analogues have been compared in different solvent systems. The results for the water/acetonitrile system are given in Table 2. It is clear that increasing the chain length on the tin compounds gives a considerable improvement of the separations (increased retention times) by reversed phase chromatography.

**Table 5. Retention times for some tri-n-butyltin compounds and their tri-n-octyltin analogues on a C-18 stationary phase (flash system).**

| Sn-compound | 2-thiophenyl | phenyl | *p*-methoxyphenyl | chloride |
|---|---|---|---|---|
| tri-n-butyltin | 34.6 | 36.1 | 33.2 | 23.8 |
| tri-n-octlyltin | > 100 | > 100 | 77 | 44 |

| | | | | |
|---|---|---|---|---|
| C-18 stationary phase: 1 g of the organostannane was mixed with 4 g of C-18 silica and brought on a C-18 column (cartridge containing 20 g C-18 silica). Flow rate: 27 ml/min (1 column volume/min) Wavelength: 210 nm (in order to detect trialkyltin compounds) The elution was started with water for one minute, after which a gradient was applied (0 to 100 % acetonitrile in 30 min). | | | | |

### 8 Synthesis of tri-n-octyltin reagents from tri-n-octyl chloride.

The tri-n-octyltin chloride can be easily converted into other synthetically valuable derivatives (Scheme 5).

### Scheme 5. Conversion of the tri-n-octyltin chloride into tri-n-octyltin azide, hydride and Stille reagents

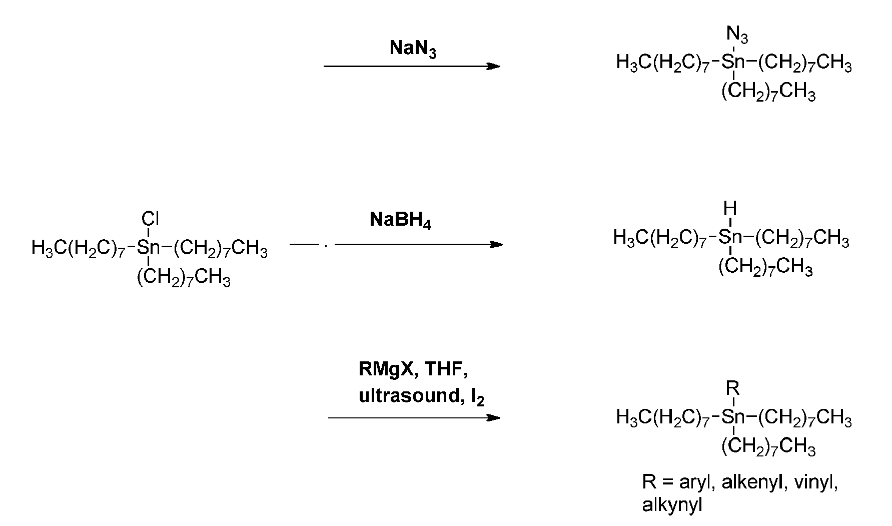

### Typical procedure : Synthesis of tri-n-octyltin azide

To a cooled (5-10°C) stirred solution of sodium azide (1g, 15.4 mmol) in deionized water (15mL) trioctyltin chloride (5g, 10.1 mmol) was added dropwise and left to stir for 5 hrs in water bath which was left to warm to RT. Heptane was added (30mL) and the organic phase was separated, washed with water (1 x 20 mL), acetonitrile (2 x 20 mL) dried over sodium sulfate and evaporated to give 4.6g (9.2 mmol) of viscous colourless oil. Yield: 91%.
¹H NMR (CDCl₃): δ = 1.70-1.60 (3H, m), 1.37-1.23 (36H, m), 0.92-0.84 (9H, t, - CH₂**Me)**
¹¹⁹Sn NMR (CDCl₃): δ = 110.9.
FT-IR (ATR): 2064 (-N₃).

### Typical procedure: Synthesis of tri-n-octyltinstannane.

### Synthesis of Grignard reagents. Typical procedure: Synthesis of tri-n-octyl(phenyl)stannane, tri-n-octyl(vinyl)stannane,tri-n-octyl(thiophen-2-yl)stannane and tri-n-octyl(4-methoxyphenyl)stannane

### - tri-n-octyl(phenyl)stannane

In a dry 100 ml round-bottom flask chloro-tri-n-octylstannane (4.74 ml, 10 mmol) and bromobenzene (3.15 ml, 30 mmol) were dissolved in dry THF (30 ml) under N₂ to give a colorless solution. Magnesium (0.972 g, 40 mmol) was added and the reaction mixture was placed in a sonicator for 4 hours. During this period the temperature of the reaction rose from 30 °C to approximately 50 °C.
The reaction mixture was then cooled to RT and water was added (10mL). The water layer wasextracted with n-heptane (100mL) and the heptane layer was washed with 3 portions (50 ml) of acetonitrile and concentrated.
Yield : 5.3 g (99 %)
¹H-NMR (CDCl₃, 400 MHz) :7.45-7.36 (m, 2H), 7.28-7.26 (m, 3H), 1.71-1.48 (m, 6H, **-CH₂**-Me), 1.39-1.15 (m, 30 H), 1.10-1.00 (t ³J_{H-H} = 8.12 Hz, 6H, Sn-**CH₂**-), 0.94-0.83 (t ³J_{H-H} = 6.76 Hz, 9H, -CH₂-**Me**)

### - tri-n-octyl(vinyl)stannane

In a dry 100 ml round-bottom flask chloro-tri-n-octylstannane (1.92 ml, 4.05 mmol) was dissolved in dry THF (30 ml) under N₂ to give a colorless solution. A solution of vinylmagnesiumbromide (1M in THF, 12.15 ml, 12.15 mmol)was added and the reaction mixture was stirred at 45°C for 4 hours.
The reaction mixture was then cooled to RT and water (10mL) was added. The water layer was extracted with n-heptane (100mL) and the heptane layer was washed with 3 portions (50 ml) of acetonitrile and concentrated.
Yield: 1.97 g (99 %)
¹H-NMR (CDCl₃, 400 MHz) : 6.54-6.40 (dd J_{H-H} = 20.76, 14.09 , 1H, Sn-C**H**), 6.15-6.10 (dd J_{H-H} = 14.00, 3.68, 1H), 5.71-5.60 (dd J_{H-H} = 20.79, 3.66, 1H), 1.70-1.40 (m, 6H, **-CH₂**-Me), 1.38-1.15 (m, 36 H), 0.90-0.80 (m, 9H, -CH₂**-Me**)

### - tri-n-octyl(thiophen-2-yl)stannane

In a dry 100 ml round-bottom flask chloro-tri-n-octylstannane (2.47 g, 5 mmol) and 2-bromothiophene (2.45 g, 15 mmol) were dissolved in dry THF (30 ml) under N₂ to give a colorless solution. Magnesium (0.49 g, 20 mmol) was added and the reaction mixture was placed in a sonicator for 4 hours. During this period the temperature of the reaction rose from 30 °C to approximately 50 °C.

The reaction mixture was then cooled to RT and water (10mL) wasadded. The water layer was extracted with 100 ml of n-heptane and the heptane layer was washed with 3 portions (50 ml) of acetonitrile and concentrated.
Yield 2.7 g (100 %)
¹H-NMR (CDCl₃, 400 MHz) : 7.60 (dd J_{H-H} = 4.65, 0.64 , 1H), 7.26 (dd J_{H-H} = 4.58 , 1H), 7.2 (dd J_{H-H}= 3.23, 0.72, 1H), 1.71-1.48 (m, 6H, **-CH₂**-Me), 1.39-1.15 (m, 30 H), 1.10-1.00 (t ³J_{H}-_{H} = 8.26 Hz, 6H, Sn-**CH₂-**), 0.94-0.83 (t ³J_{H}-_{H} = 6.78 Hz, 9H, -CH₂-**Me**)
- tri-n-octyl(4-methoxyphenyl)stannane
In a dry 100 mL round-bottom flask 1-bromo-4-methoxybenzene (3,77 ml, 30,0 mmol), chlorotrioctylstannane (4,75 ml, 10 mmol), and magnesium (0,753 g, 31,0 mmol) were mixed in dry THF. Diiodine (0,127 g, 0,500 mmol) was added and the mixture was sonicated at 30 °C for 3 hours. The resulting mixture was then diluted with 200 ml of heptane and washed 3 times with 150 ml portions of ACN.
Yield : 5.37 g (95%)
¹H-NMR, CDCl₃, 400 MHz : :7.30 (d ³J_{H-H} = 8.49 Hz, 2H),6.98 ((d ³J_{H-H} = 8.50 Hz, 2H), 3.76 (s, 3 H), 1.66-1.48 (m, 6H, **-CH₂**-Me), 1.38-1.15 (m, 30 H), 1.12-0.99 (t ³J_{H-H} = 6.8 Hz, 6H, Sn-**CH₂**-), 0.92-0.83 (t ³J_{H-H} = 6.75 Hz, 9H, -CH₂-**Me**)

### 9 Use of tri-n-alkylorganotin reagents in the Stille reaction.

No reports on the use of long alkyl chain tin reagents in Stille reaction have been published yet. To the best of our knowledge there are no published reports describing the beneficial properties of long alkyl chain tin reagents in terms of purification and recycling either.

The Stille reagents can be prepared via a the reaction of the triorganotin chloride with an appropriate Grignard reagent (see Lamande-Langle, S. et al. , Journal of Organometallic Chemistry, 2009, 694 (15), 2368-2374). An advantage of long alkyl chains connected to the tin atom is that, after reaction, acetonitrile/heptane extraction is sufficient to purify these compounds.

The purification of the reaction product and the recovery of the tin byproduct can be done via reversed-phase chromatography. We compared the purification of the reaction mixtures of reaction of o-chloronitrobenzene with tri-*n*-butyl and tri-n-octyl-4-methoxyphenyltin respectively (Scheme 6, table 4).

### Scheme 6 : Comparison of the Stille reaction of o-bromobenzonitrile with tri-n-butyl and tri-n-octyl-4-tolyltin.

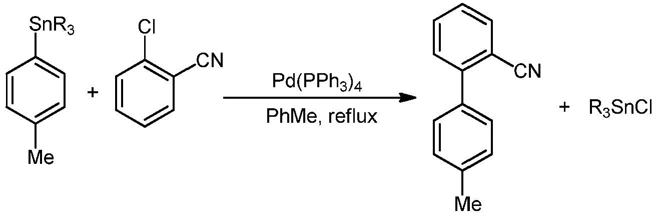

**Table 4. Tin content (ppm) in the reaction product after purification. These tin content are estimated on the basis of the NMR spectrum.**

| **Purification Method** | **R=Bu** | **R = Octyl** |
|---|---|---|
| **Normal Phase Column (NPC)** | **Tin Content** | |
| NPC alone | > 10.000 | >10.000 |
| NPC + n-heptane/AcN extraction* | > 10.000 | <1.000 |
| NPC + CsF treatment** | > 10.000 | >10.000 |

| **Reversed Phase Column (H₂O-AcN)** | **Tin Content** | |
|---|---|---|
| 30 min gradient (0-100% AcN) | > 10.000 | <1.000 |

| | | |
|---|---|---|
| * 100 ml of an acetonitrile solution of the crude product was washed 3 times with 100 ml portions of heptane ** the reaction mixture was dissolved in 100 ml of acetone/water (95/5) and stirred for 10 min with 4 g of CsF, filtered and dried ***tin content not yet determined | | |

### Typical procedure: Synthesis of 4'-methoxy-2-nitrobiphenyl

In a dry 100 ml round bottom flask (4-methoxyphenyl)trioctylstannane (7.46 g, 13.20 mmol), 1-chloro-2-nitrobenzen (1.891 g, 12 mmol) and tetrakis(triphenylphosphine) palladium (0.693 g, 0.6 mmol) were dissolved in dry toluene (30 ml) under N₂ to give an orange solution. The reaction was heated for 24 hours at reflux, toluene was evaporated in vacuo and the the crude product was purified using the methods described in table 4.
¹H-NMR (CDCl₃, 400 MHz) : 8.08 (d, 1H, J=2.4 Hz), 7.77 (dd, 1 H, J= 2.5, 8.8 Hz), 7.30-7.52 (m, 3H), 7.17 (d, 1 H, J = 8.8 Hz), 4.02 (s, 3H)

The purification of the end compounds (in terms of tin content) becomes much more efficient when using the tri-n-octyltin reagents. When the last figure in the table is available it will be clear if the reversed phase chromatography needs further 'fine tuning'. The recovery of tri-n-octyltin halide was already examined for the reaction in Scheme 6. We collected the tri-n-octyltin halide waste after reversed phase chromatography and found that up to 95 % could be recovered.

### 10 Use of tri-alkyltin hydride in radical dehalogenation /cyclization.

To the best of our knowledge there are no published reports about the beneficial properties of long alkyl chain tin reagents in terms of purification and recycling. The implementation of a closed-loop system would however be of the uppermost importance as tin hydride reagents are currently used in the synthesis of some commercially very important molecules.

The applications of tri-n-butyltin hydride in free radical chemistry are widely spread. Tremendous efforts have been undertaken in order to find better alternatives to overcome the previously mentioned disadvantages of this compound but no other, more efficient method has been yet proposed. In embodiments of the present invention, we keep the advantages of the tri-*n*-butyltin hydride but by extending the alkyl chain length we tackle both the toxicity and purification problems. A comparative test with a less complex model system in a free radical reduction/cyclization reaction of benzyl allyl(2-iodophenyl)carbamate with tri-*n*-butyltin hydride and tri-*n*-octyltin hydride was carried out (Scheme 7). 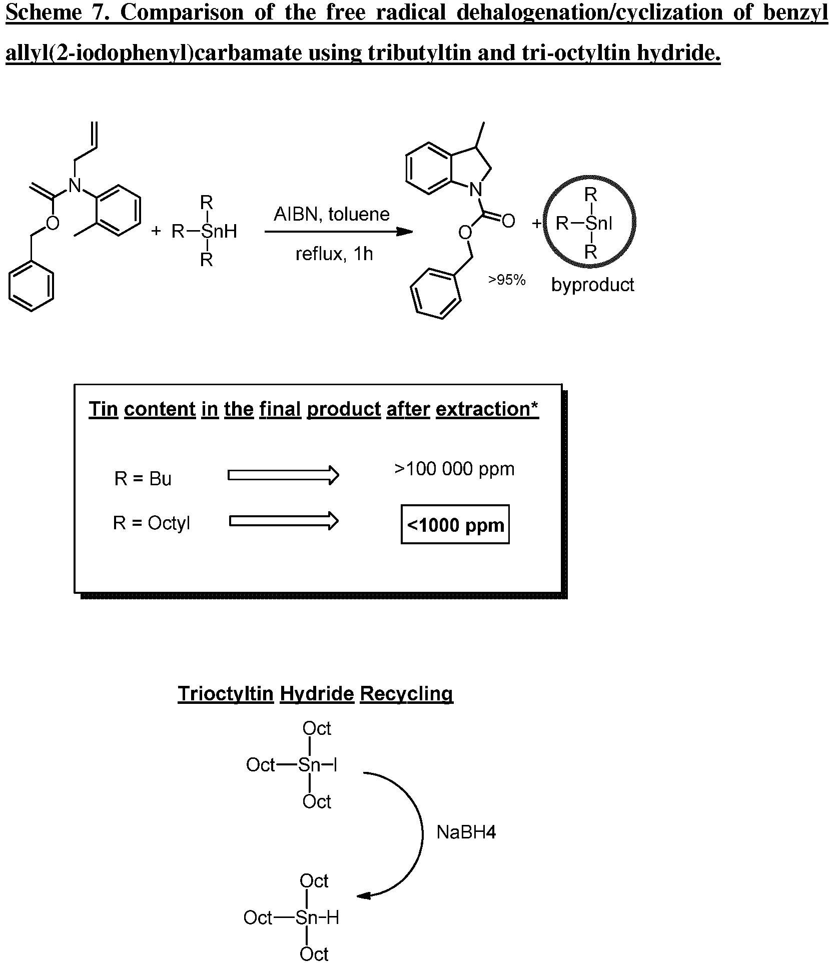 * Purification: Mixture dissolved in 200 ml of CH₃CN and washed 3 times with 50 ml portions of heptane.

Both reaction mixtures were purified in the same way. The crude mixture was dissolved in 200 ml of acetonitrile and subsequently extracted with 3 portions of heptane. The tin content dropped from above 100 000 ppm in the case of tri-n-butyltin hydride to less than 1000 ppm when using the octyl counterpart. Optimization of the extraction method can reach even lower ppm levels. The n-heptane layers of the extractions were combined and treated with NaBH₄ yielding tri-n-octyltin hydride reagent delivering a recovery strategy of the tri-n-octyltin halide waste. 3 re-use cycles of tin for the same transformation where performed without any considerable loss in purity or yield of the reaction product.

### Free radical dehalogenation/cyclization using tri-n-octyl hydride. Typical procedure: Synthesis of N-benzyloxycarbonyl-3-methylindoline

In a 100 mL round-bottom flask trioctylstannane (1,733 g, 3,77 mmol) and benzyl allyl(2-iodophenyl)carbamate (0,824 g, 2,096 mmol) were dissolved in dry toluene (25 mL) under nitrogen to give a colorless solution. (E)-2,2'-(diazene-1,2-diyl)bis(2-methylpropanenitrile) (0,034 g, 0,210 mmol) was added and the mixture was heated at 95°C for 30 min.
Heating was then switched off, toluene was evaporated and the mixture was diluted with acetonitrile (200mL). The acetonitrile layer was washed with heptane (3 X 50mL) and evaporated to give 0.53 g of the final product (95%).
¹H-NMR (CDCl₃, 400 MHz) : 7.8 (bs, 1 H); 7.5-7.2 (m, 6 H), 7.2-7.1 (m, 2H), 7.0 (t, ³J_{H-H} : 7.38 Hz, 1 H), 5.3 (s, **CH₂-**O, 2 H), 4.25 (dd, 10.89 Hz, 1.17 Hz, 1 H), 3.52 (m, 1 H), 3.41 (m, 1 H), 1.26 (d, ³J_{H-H} , 6.9 Hz, 3 H)

### Tri-n-octyltin halide recovery and transformation into the corresponding hydride:

Heptane layers were combined and washed with water (20 mL), acetonitrile (2 x 10 ml) and concentrated. The resulting oil was dissolved in propanol (25 mL) and 0.5 g of sodium borohydride was added. The mixture was stirred for 1 h at RT, diluted with heptane (100mL) and washed with water (2 x 25 mL), acetonitrile (3 x 25 mL) and concentrated to give 1,7g (98%) of oil which was used in the next cycle. The procedure was repeated 3 times. The yields of the final product and the recovered tri-*n*-octyltin hydride in each cycle are given in Table 5.

**Table 5. Yields of N-benzyloxycarbonyl-3-methylindoline and recovered tri-n-octyltin hydride.**

| **Cycle** | **Product yield, %** | **Recovered tin compound, %** |
|---|---|---|
| **I** | **95** | **>95** |
| **II** | **97** | **>95** |
| **III** | **90** | **>95** |

### 11 Use of tri-alkyltin azides.

Test reactions were successfully performed using tri-n-octyltin azide.

## Claims

1. A method for the synthesis of an organic molecule, said method comprising the steps of:
(a) Reacting a first reactant with an organotin reactant having at least one organic group having from 5 to 20 carbon atoms selected from alkyl, alkoxyalkyl, alkoxy, alkylthioalkyl, carboxylates of general formula R⁵COO-, and alkylaminoalkyl groups, thereby forming a mixture of an organic molecule and a tin-containing by-product, and
(b) Removing at least 99% of the tin-containing by-product from said mixture in such a way as to provide a purified organic molecule comprising less than 10000 ppm, preferably less than 1000 ppm and most preferably less than 100 ppm of remaining tin-containing by-product, wherein said removing step is either an extraction between a first liquid being an alkane or a mixture of alkanes having from 5 to 17 carbon atoms and a second liquid more polar than said first liquid and at least partly immiscible therewith or is a reversed phase chromatography, wherein R⁵ is an alkyl group having from 1 to 18 carbon atoms.

2. The method according to claim 1, wherein said second liquid is acetonitrile.

3. The method according to any one of the preceding claims, further comprising a further step wherein the removed tin-containing by-product is reacted with a second reactant to regenerate said organotin reactant.

4. The method according to claim 3, wherein the amount of regenerated organotin reactant represents at least 90%, preferably at least 95% of the amount of organotin reactant reacted in step (a).

5. The method according to claim 3 or claim 4 wherein the regenerated organotin reactant is reused in step (a) of the present method, thereby recycling said regenerated organotin reactant.

6. The method according to anyone of the preceding claims, wherein said synthesis is selected from Stille reactions, cycloadditions of tri-alkyltin azides to nitriles, radical dehalogenations and radical cyclizations.

7. Use of an organotin reactant having at least one organic group having from 5 to 20 carbon atoms selected from alkyl, alkoxyalkyl, alkoxy, alkylthioalkyl, carboxylates of general formula R⁵COO-, and alkylaminoalkyl groups in a Stille reaction, wherein R⁵ is an alkyl group having from 1 to 18 carbon atoms.

8. Use according to claim 7, wherein said organotin reactant is of general formula SnR¹R²R³R⁴,
wherein R¹ and R² independently either:
● together with the Sn to which they are attached form a 5 or 6 membered saturated ring, said 5 or 6 membered saturated ring containing 3 or more carbon atoms and optionally one or more nitrogen or oxygen atoms, or
● are independently selected from the group consisting of alkyl, alkoxy, alkoxyalkyl, alkylthioalkyl, carboxylates of general formula R⁵COO-, and alkylaminoalkyl, aryl, heteroaryl, mono- or poly-substituted alkyl, alkoxy, alkoxyalkyl, alkylthioalkyl, carboxylates of general formula R⁵COO-, and alkylaminoalkyl, aryl and heteroaryl,
wherein R³ is selected from alkyl, alkoxyalkyl, alkoxy, alkylthioalkyl, carboxylates of general formula R⁵COO-, and alkylaminoalkyl groups, having from 5 to 20 carbon atoms.
wherein R⁴ is selected from aryl, heteroaryl, alkenyl (e.g. vinyl or allyl), alkynyl (e.g. acetylenyl), alkyl, benzyl, mono- or poly-substituted aryl, heteroaryl, alkenyl, alkynyl, alkyl, and benzyl, wherein R⁵ is an alkyl group having from 1 to 18 carbon atoms.

9. An organotin compound having the general formula R¹R²R³SnR⁴ wherein R¹ and R² either:
● together with the Sn to which they are attached form a 5 or 6 membered saturated ring, said 5 or 6 membered saturated ring containing 3 or more carbon atoms and optionally one or more nitrogen or oxygen atoms, or
● are independently selected from the group consisting of alkyl, alkoxy, alkoxyalkyl, alkylthioalkyl, carboxylates of general formula R⁵COO-, and alkylaminoalkyl, aryl, heteroaryl, mono- or poly-substituted alkyl, alkoxy, alkoxyalkyl, aryl and heteroaryl,
wherein R³ is selected from alkyl, alkoxyalkyl, alkoxy, alkylthioalkyl, carboxylates of general formula R⁵COO-, and alkylaminoalkyl groups, having from 5 to 20 carbon atoms,
Wherein R⁴ is selected from aryl, heteroaryl, alkynyl, benzyl, mono- or poly-substituted aryl, heteroaryl, alkynyl, and benzyl, with the proviso that R⁴ is neither phenyl nor a biphenyl having its bond linking both phenyls in meta of the tin atom, wherein R⁵ is an alkyl group having from 1 to 18 carbon atoms.

10. The organotin compound according to claim 9 wherein R³ is an alkyl having from 5 to 20 carbon atoms.

11. An organotin compound according to claim 9 or claim 10 wherein R¹, R² and R³ the same and are selected from alkyl, alkoxyalkyl, alkoxy, alkylthioalkyl, carboxylates of general formula R⁵COO-, and alkylaminoalkyl groups, having from 5 to 20 carbon atoms wherein R⁵ is an alkyl group having from 1 to 18 carbon atoms.

12. A method for synthesizing an organotin compound according to any one of claims 9 to 11, said method comprising a step of reacting an organotin compound of general formula R¹R²R³SnX with a Grignard reagent of general formula R⁴MgR⁴ or R⁴MgX', wherein X are independently selected from halogens.

13. An organotin compound having the general formula R¹R²R³SnY,
Wherein Y is selected from halogens, N₃, hydrogen, R⁴, carboxylates of general formula R⁵COO-, SnR⁷R⁸R⁹, OSnR⁷R⁸R⁹, OR', SiR'₃,
wherein R¹ and R⁴ are independently selected from the group consisting of aryl, mono-substituted aryl, and poly-substituted aryl,
wherein R² is selected from alkyl, alkoxyalkyl, alkoxy, alkylthioalkyl, carboxylates of general formula R⁵COO-, and alkylaminoalkyl groups, having from 5 to 20 carbon atoms and aryl, mono-substituted aryl, and poly-substituted aryl,
wherein R⁷, R⁸ and R⁹ are independently selected from the group consisting of alkyl, alkoxy, alkoxyalkyl, alkylthioalkyl, alkylaminoalkyl, carboxylates of general formula R⁵COO-, aryl, heteroaryl, and mono- or poly-substituted alkyl, alkoxy, alkoxyalkyl, alkylthioalkyl, alkylaminoalkyl, carboxylates of general formula R⁵COO-, aryl and heteroaryl,
wherein R' is selected from the group consisting of alkyl, alkoxy, alkoxyalkyl, alkylthioalkyl, alkylaminoalkyl, carboxylates of general formula R⁵COO-, aryl, heteroaryl, and mono- or poly-substituted alkyl, alkoxy, alkoxyalkyl, alkylthioalkyl, alkylaminoalkyl, carboxylates of general formula R⁵COO-, aryl and heteroaryl,
wherein R³ is selected from alkyl, alkoxyalkyl, alkoxy, alkylthioalkyl, carboxylates of general formula R⁵COO-, and alkylaminoalkyl groups, having from 5 to 20 carbon atoms, wherein R⁵ is an alkyl group having from 1 to 18 carbon atoms.

14. An organotin compound having the general formula R¹R²R³SnY wherein Y is selected from halogens, N₃, hydrogen, R⁴ carboxylates of general formula R⁵COO-, SnR⁷R⁸R⁹, OSnR⁷R⁸R⁹, OR', SiR'₃,
wherein R¹ and R² together with the Sn to which they are attached form a 5 or 6 membered saturated hydrocarbon ring containing 3 or more carbon atoms and optionally one or more nitrogen or oxygen atoms,
wherein R³ is an alkyl having from 5 to 20 carbon atoms,
wherein R⁴ is selected from aryl, heteroaryl, alkynyl, benzyl, mono- or poly-substituted aryl, heteroaryl, alkynyl, and benzyl,
wherein R⁷, R⁸ and R⁹ are independently selected from the group consisting of alkyl, alkoxy, alkoxyalkyl, alkylthioalkyl, alkylaminoalkyl, carboxylates of general formula R⁵COO-, aryl, heteroaryl, and mono- or poly-substituted alkyl, alkoxy, alkoxyalkyl, alkylthioalkyl, alkylaminoalkyl, carboxylates of general formula R⁵COO-, aryl and heteroaryl,
wherein R' is selected from the group consisting of alkyl, alkoxy, alkoxyalkyl, alkylthioalkyl, alkylaminoalkyl, carboxylates of general formula R⁵COO-, aryl, heteroaryl, and mono- or poly-substituted alkyl, alkoxy, alkoxyalkyl, alkylthioalkyl, alkylaminoalkyl, carboxylates of general formula R⁵COO-, aryl and heteroaryl,
wherein R⁵ is an alkyl group having from 1 to 18 carbon atoms, preferably 1 to 3 carbon atoms.

15. An organotin compound having the general formula R¹R²R³SnY wherein Y is selected from halogens, N₃, hydrogen, R⁴, carboxylates of general formula R⁵COO-, SnR⁷R⁸R⁹, OSnR⁷R⁸R⁹, OR', SiR'₃,
wherein R¹ and R² are independently selected from the group consisting of alkyl, alkoxy, alkoxyalkyl, alkylthioalkyl, carboxylates of general formula R⁵COO-, and alkylaminoalkyl, aryl, heteroaryl, mono- or poly-substituted alkyl, alkoxy, alkoxyalkyl, alkylthioalkyl, carboxylates of general formula R⁵COO-, and alkylaminoalkyl, aryl and heteroaryl, wherein R³ is selected from alkoxyalkyl, alkoxy, alkylthioalkyl, carboxylates of general formula R⁵COO-, and alkylaminoalkyl groups, having from 5 to 20 carbon atoms,
wherein R⁴ is selected from aryl, heteroaryl, alkynyl, benzyl, mono- or poly-substituted aryl, heteroaryl, alkynyl, and benzyl,
wherein R⁷, R⁸ and R⁹ are independently selected from the group consisting of alkyl, alkoxy, alkoxyalkyl, alkylthioalkyl, alkylaminoalkyl, carboxylates of general formula R⁵COO-, aryl, heteroaryl, and mono- or poly-substituted alkyl, alkoxy, alkoxyalkyl, alkylthioalkyl, alkylaminoalkyl, carboxylates of general formula R⁵COO-, aryl and heteroaryl,
wherein R' is selected from the group consisting of alkyl, alkoxy, alkoxyalkyl, alkylthioalkyl, alkylaminoalkyl, carboxylates of general formula R⁵COO-, aryl, heteroaryl, and mono- or poly-substituted alkyl, alkoxy, alkoxyalkyl, alkylthioalkyl, alkylaminoalkyl, carboxylates of general formula R⁵COO-, aryl and heteroaryl,
wherein R⁵ is an alkyl group having from 1 to 18 carbon atoms.
